# EUROPÄISCHE PATENTANMELDUNG

(11) **EP 4 095 288 A1**
(43) Veröffentlichungstag der Anmeldung: **30.11.2022**
(21) Anmeldenummer: 22173657.2
(22) Anmeldetag: 17.05.2022
(51) Int. Cl.: C25D 5/02, C25D 5/34, C25D 7/00, F01D 5/00, F01D 5/28

(54) **VERFAHREN ZUM BESCHICHTEN EINES BAUTEILS**

(30) Priorität: 27.05.2021 DE 102021113698; 08.12.2021 DE 102021132256
(71) Anmelder: MTU Aero Engines AG, 80995 München (DE)
(72) Erfinder: Linska, Josef, 80995 München (DE); Auracher, Richard, 80995 München (DE); Gast, Alexander, 80995 München (DE)

(57) **Zusammenfassung**

Die vorliegende Erfindung betrifft ein Verfahren zum Beschichten eines Bauteils (10), wobei das Bauteil (10) eine erste und eine zweite Oberfläche (41, 42) aufweist, und wobei die erste und die zweite Oberfläche (41, 42) in einer Kante (35) aneinandergrenzen, bei welchem Verfahren i) zunächst die Kante (35) zwischen der ersten und zweiten Oberfläche (41, 42) verrundet wird, und ii) anschließend eine Beschichtung (30) auf die erste Oberfläche (41) aufgebracht wird.

## Beschreibung

### Technisches Gebiet

Die vorliegende Erfindung betrifft ein Verfahren zum Beschichten eines Bauteils.

### Stand der Technik

Das zu beschichtende Bauteil kann insbesondere für eine Strömungsmaschine vorgesehen sein, etwa für ein Strahl- bzw. Mantelstromtriebwerk. Funktional gliedert sich eine solche Strömungsmaschine in Verdichter, Brennkammer und Turbine. Im Falle des Triebwerks wird bspw. angesaugte Luft vom Verdichter komprimiert und in der nachgelagerten Brennkammer mit hinzugemischtem Kerosin verbrannt. Das entstehende Heißgas, eine Mischung aus Verbrennungsgas und Luft, durchströmt die nachgelagerte Turbine und wird dabei expandiert.

Bei der vorliegend in Rede stehenden Beschichtung kann es sich im Allgemeinen bspw. um eine Schutzbeschichtung handeln, etwa zum thermischen und/oder mechanischen Schutz einer im Verdichter- oder Heißgaskanal angeordneten Oberfläche. Die Beschichtung kann aber insbesondere auch an einer Schaufelspitze aufgebracht werden und als besonders harte Schicht dem Einlaufen in einen Einlaufbelag dienen. Dies soll ein bevorzugtes Anwendungsumfeld illustrieren, den Gegenstand aber zunächst nicht in seiner Allgemeinheit beschränken.

### Darstellung der Erfindung

Der vorliegenden Erfindung liegt das technische Problem zugrunde, ein vorteilhaftes Verfahren zum Beschichten einer Oberfläche eines Bauteils anzugeben.

Dies wird erfindungsgemäß mit dem Verfahren nach Anspruch 1 gelöst. Dabei wird die Beschichtung auf eine erste Oberfläche des Bauteils aufgebracht, wobei zuvor eine Kante, mit der die erste an eine zweite Oberfläche grenzt, verrundet wird. Das vorherige Verrunden kann beim Beschichten eine übermäßigen Materialanlagerung an der Kante vorbeugen, die sich bspw. bei einem galvanischen Abscheideprozess aus einer Konzentration der Feldlinien an der unverrundeten, scharfen Kante ergeben könnte. Die Erfinder haben beobachtet, dass ein seitlicher Überstand der Beschichtung, der aus einem solchen übermäßigen Materialauftrag resultieren würde, später hinsichtlich der Festigkeit des Bauteils nachteilig sein kann, insbesondere unter dynamischer Belastung (z. B. Schwingfestigkeit). In dem Überstand kann bspw. unter einer Schwingungsanregung geometriebedingt die mechanische Spannung im Vergleich höher sein, insbesondere das Verhältnis Spannung/Amplitude groß werden. Dort kann dann bspw. eine Initialstelle für eine Entstehung eines Risses liegen, der sich schließlich in das Bauteil hinein ausbreiten und zu dessen Versagen führen kann.

Bezogen auf das Beispiel eingangs kann die erste Oberfläche die Schaufelspitzenfläche und kann die zweite Oberfläche eine Seitenfläche des Schaufelblatts sein, also die Saug- und/oder Druckseitenfläche. Die Schwingungsanregung kann dann insbesondere durch benachbarte Schaufelgitter erfolgen, wodurch das Schaufelblatt in Schwingung versetzt wird, wobei die Schwingungsform Komponenten in allen Raumrichtungen enthalten kann. Das verfahrensgemäß hergestellte Bauteil kann insbesondere dann vorteilhaft Anwendung finden, wenn Moden mit hohen Schwingspannungen im Bereich der Beschichtung auftreten. Nachgewiesen werden kann die Schwingfestigkeit bspw. mittels High Cycle Fatigue Test, bei dem die Schaufel durch Fußpunktanregung im Resonanzfrequenzbereich in Schwingung versetzt und dabei ermüdet wird. Unabhängig von den Untersuchungsdetails lässt sich mit dem Verrunden der Überstand zumindest reduzieren, was strukturmechanisch von Vorteil sein kann, insbesondere im Falle einer vergleichsweise harten Beschichtung. Eine solche kann nämlich aufgrund der höheren Steifigkeit besonders rissträchtig sein.

Bevorzugte Ausgestaltungen finden sich in den abhängigen Ansprüchen und der gesamten Offenbarung, wobei bei der Darstellung der Merkmale nicht immer in Einzelnen zwischen Verfahrens- und Vorrichtungsaspekten unterschieden wird; jedenfalls implizit ist die Offenbarung hinsichtlich sämtlicher Anspruchskategorien zu lesen. Wird bspw. ein in bestimmter Weise bearbeitetes/beschichtetes Bauteil beschrieben, ist dies zugleich Offenbarung eines entsprechenden Verfahrens, und umgekehrt. Generell sind "ein" und "eine" im Rahmen der vorliegenden Offenbarung ohne ausdrücklich gegenteilige Angabe als unbestimmte Artikel und damit stets implizit auch als "mindestens ein" bzw. "mindestens eine" zu lesen. Die erste Oberfläche kann bspw. in einer weiteren Kante an eine weitere Oberfläche des Bauteils grenzen, im Falle des Schaufelblatts kann z. B. die Schaufelspitzenfläche in jeweils einer Kante an die Saug- und auch die Druckseitenfläche. Bevorzugt werden sämtliche Kanten, in denen die erste Oberfläche an eine jeweilige andere Oberfläche grenzt, vor dem Beschichten verrundet. Die zweite Oberfläche bzw. -flächen bleibt/bleiben bevorzugt unbeschichtet, die Beschichtung wird also nur auf die erste Oberfläche aufgebracht.

Gemäß einer bevorzugten Ausführungsform hat eine in Schritt i) eingebrachte Verrundung im Schnitt betrachtet einen Krümmungsradius R, der mindestens dem 0,5-fachen einer Dicke d der Beschichtung entspricht. Weiter und besonders bevorzugt kann der Krümmungsradius mindestens dem 0,7- bzw. 0,8-fachen der Schichtdicke entsprechen. Vorteilhafte Obergrenzen, die im Allgemeinen auch von den Untergrenzen unabhängig von Interesse sein können und offenbart sein sollen, liegen bei in der Reihenfolge der Nennung zunehmend bevorzugt dem 5-, 4-, 3- bzw. 2,5-fachen der Dicke d. Mit einem entsprechenden Radius R kann bspw. einem seitlichen Überstand der Beschichtung gegenüber der zweiten Oberfläche vorgebeugt bzw. ein solcher vollständig verhindert werden.

Der Schnitt bzw. die Schnittebene liegt hierbei senkrecht zur Kante bzw. Kantenlinie, die sich nach der vor Schritt i) vorhandenen und mit dem Verrunden abgetragenen Kante bestimmt. Die Verrundung muss hierbei nicht zwingend einen einzigen Radius haben, sondern kann sich aus mehreren Segmenten zusammensetzen. Bevorzugt hat dann jedenfalls eines der Segmente einen entsprechenden Radius, besonders bevorzugt liegt er für sämtliche Segmente in einem entsprechenden Bereich.

In bevorzugter Ausgestaltung wird die erste Oberfläche vor dem Verrunden materialabtragend bearbeitet, vorzugsweise durch Schleifen. Die materialabtragende Bearbeitung, mit der die erste Oberfläche bspw. für das Beschichten an sich vorbereitet werden kann, erzeugt dabei die (scharfe) Kante, die dann in Schritt i) wieder gezielt entfernt wird.

Gemäß einer bevorzugten Ausführungsform umfasst das Verrunden der Kante eine Bearbeitung mit einer Bürste, insbesondere mit einer Industriebürste. Bevorzugt ist ein kombinierter Prozess, wird die mit der Bürste eingebrachte Verrundung nämlich anschließend noch schleifend bearbeitet. Die Verrundung kann damit geglättet werden, bspw. in einem Gleitschleifprozess. Mit den kombinierten Schritten lässt sich eine sehr weiche, also glatt verlaufende Kontur erzeugen. Im Schnitt betrachtet kann die Verrundung jeweils tangential in die jeweilige Oberfläche laufen, was generell bevorzugt ist (auch unabhängig von der Kombination bürsten/schleifen).

Das Aufbringen der Beschichtung in Schritt i) erfolgt in bevorzugter Ausgestaltung galvanisch, also als elektrochemische Abscheidung. Das Bauteil bzw. die zu beschichtende Oberfläche wird dabei in ein Bad eingebracht und als Elektrode beaufschlagt, bspw. als Kathode zur Anlagerung von positiven Metallionen. Mit dem Verrunden kann hierbei einer Konzentration der elektrischen Feldlinien und damit einer übermäßigen Materialablagerung vorgebeugt werden, vgl. auch die vorstehenden Anmerkungen. Die Beschichtung kann aber im Allgemeinen auch mittels außenstromloser chemischer Beschichtung erfolgen oder mittels Löten.

In bevorzugter Ausgestaltung weist die Beschichtung eine Metallmatrix, vorzugsweise aus Nickel mit eingelagerten Bornitrid Hartstoffpartikeln auf, es kann sich insbesondere um ein sog. Ni / cBN-Coating handeln. Das Bornitrid kann einerseits aufgrund seiner hohen Festigkeit von Interesse sein, insbesondere zur Präparation der Schaufelspitze zum Einlaufen. Andererseits kann das spröde Material an sich rissträchtig sein bzw. können in der Beschichtung cBN-Kristalle vorliegen, die aufgrund ihrer kantigen Struktur Initialstellen für eine Rissausbreitung darstellen können. Indem mit dem Verrunden ein Überstand der Beschichtung verringert oder vermieden wird, lässt sich das Risiko einer Rissinitialisierung zumindest absenken. Anstelle der cBN-Hartstoffpartikel können auch ähnlich harte Partikel wie z. B. Diamantpartikel oder Karbide verwendet werden.

Wie bereits erwähnt, handelt es sich bei dem Bauteil bevorzugt um ein Schaufelblatt für eine Strömungsmaschine, das also in deren Gaskanal angeordnet wird. Bevorzugt ist das Schaufelblatt Teil einer Laufschaufel, und ist deren radial außenliegende Schaufelspitzenfläche die "erste" Oberfläche. Die dann verrundete Kante liegt also zwischen Schaufelspitzenfläche und Saug- oder Druckseitenfläche, bevorzugt werden beide Kanten verrundet. Im Allgemeinen ist auch eine Anwendung bei Verdichterleitschaufeln sowie im Turbinenbereich denkbar, bevorzugt handelt es sich um eine Verdichterschaufel.

Die Erfindung betrifft auch ein Verfahren zum Herstellen eines solchen Bauteils, insbesondere eines Schaufelblatts, vorzugsweise einer Laufschaufel/Verdichterschaufel, und zwar durch Beschichten gemäß der vorliegenden Offenbarung.

Ferner betrifft die Erfindung ein Bauteil für eine Strömungsmaschine, das in einem entsprechenden Verfahren hergestellt wurde, insbesondere ein Schaufelblatt einer Laufschaufel/Verdichterschaufel. Dabei ist die auf die erste Oberfläche aufgebrachte Beschichtung in einem Schnitt betrachtet allenfalls bündig mit der zweiten Oberfläche, steht sie also nicht nach außen über (sie kann leicht nach innen versetzt sein).

### Kurze Beschreibung der Zeichnungen

Im Folgenden wird die Erfindung anhand von Ausführungsbeispielen näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Figur 1: eine Strömungsmaschine, nämlich ein Mantelstromtriebwerk in einem schematischen Längsschnitt;
- Figur 2: eine Laufschaufel in einer schematischen Übersichtsdarstellung;
- Figur 3: eine Detailansicht zur Illustration einer auf die Schaufelspitze der Laufschaufel gemäß Figur 2 aufgebrachten Beschichtung;
- Figur 4: eine nicht erfindungsgemäße Vergleichsdarstellung einer Beschichtung;
- Figur 5: eine Laufschaufel als Teil einer Blisk.

### Bevorzugte Ausführung der Erfindung

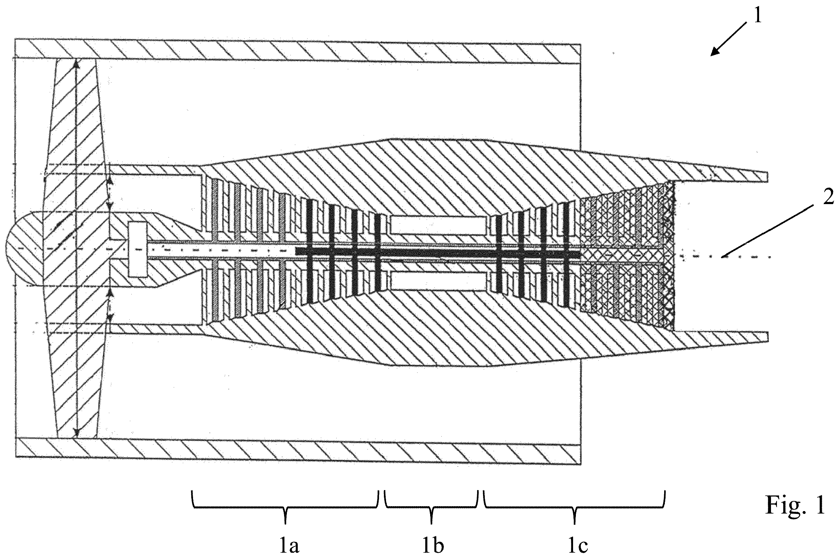

**Fig. 1** zeigt eine Strömungsmaschine 1, konkret ein Mantelstromtriebwerk, in einem Axialschnitt. Die Strömungsmaschine 1 gliedert sich funktional in Verdichter 1a, Brennkammer 1b und Turbine 1c. Sowohl der Verdichter 1a als auch die Turbine 1c sind jeweils aus mehreren Stufen aufgebaut, jede der Stufen setzt sich aus einem Leit- und einem darauf folgenden Laufschaufelkranz zusammen. Im Verdichter 1a wird die angesaugte Luft komprimiert, sie wird dann in der nachgelagerten Brennkammer 1b mit hinzugemischtem Kerosin verbrannt. Der vorliegende Gegenstand richtet sich insbesondere auf eine Laufschaufel, die im Allgemeinen auch in der Turbine 1c, insbesondere jedoch im Verdichter 1a Anwendung finden kann.

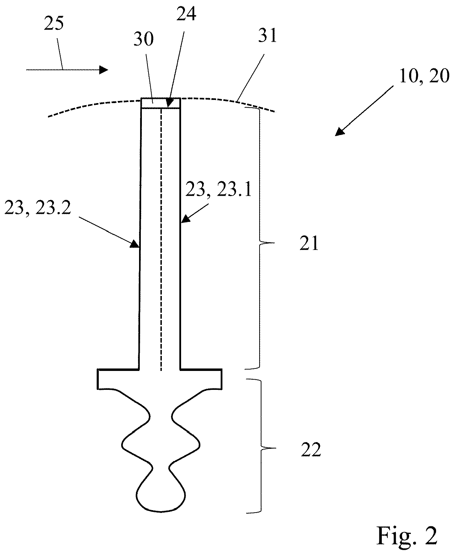

**Fig. 2** zeigt ein Bauteil 10, nämlich ein Laufschaufelblatt 21 einer Laufschaufel 20, die zusätzlich einen Schaufelfuß 22 aufweist, in einer schematischen Axialansicht. Mit dem Schaufelfuß 22 wird die Laufschaufel 20 in einer hier nicht dargestellten Scheibe montiert, im Betrieb rotiert sie in einer Umlaufrichtung 25. Das Schaufelblatt weist zwei Seitenflächen 23 auf, nämlich eine Saugseitenfläche 23.1 und eine Druckseitenfläche 23.2. Auf eine Schaufelspitzenfläche 24 ist eine Beschichtung 30 aufgebracht, die dem Einlaufen in einen hier nur schematisch angedeuteten Einlaufbelag 31 dient.

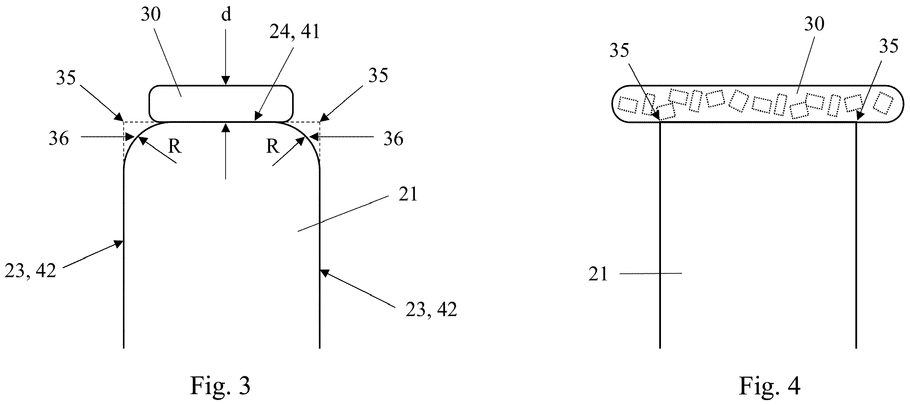

**Fig. 3** zeigt die Schaufelspitzenfläche 24 mit der Beschichtung 30 in einer Detailansicht. Die Beschichtung 30 wird durch elektrochemisches Abscheiden einer Metallmatrix, vorzugsweise Nickel mit Einlagerung von Hartstoffpartikeln, vorzugsweise Bornitrid aufgebracht. Die Schaufelspitzenfläche 24 stellt eine erste Oberfläche 41 dar, die beschichtet wird, die Seitenflächen 23 sind hingegen zweite Oberflächen 42 und bleiben unbeschichtet. Vor dem Aufbringen der Beschichtung wird die Schaufelspitzenfläche 24 geschliffen, wodurch zu den zweiten Oberflächen 42 hin jeweils eine scharfe Kante 35 entsteht. Diese wird vor dem Aufbringen der Beschichtung 30 verrundet, was vorliegend durch eine Kombination aus Bürsten und anschließendem Schleifen erfolgt ist. Damit kann bei der darauffolgenden galvanischen Abscheidung einer Konzentration der elektrischen Feldlinien vorgebeugt werden, sodass dort kein übermäßiger Materialauftrag erfolgt und die Beschichtung 30 auch nicht seitlich übersteht. Die jeweilige Verrundung 36 ist so eingestellt, dass der jeweilige Krümmungsradius R in etwa der Dicke d der Beschichtung 30 entspricht.

**Fig. 4** zeigt zum Vergleich eine nicht erfindungsgemäß beschichtete Schaufelspitzenfläche 24. Die Beschichtung 30 steht seitlich gegenüber den Seitenflächen 23 über, was strukturmechanisch nachteilig sein kann. So können bspw. unter Hochfrequenzwechselbelastung, insbesondere einer Schwingungsbelastung im Schaufelspitzenbereich 24, Risse in der Beschichtung 30 entstehen und sich von dort in das Schaufelblatt 21 ausbreiten. Diese Rissinitialisierung kann durch kristallines Bornitrid, hier schematisch angedeutet, begünstigt sein.

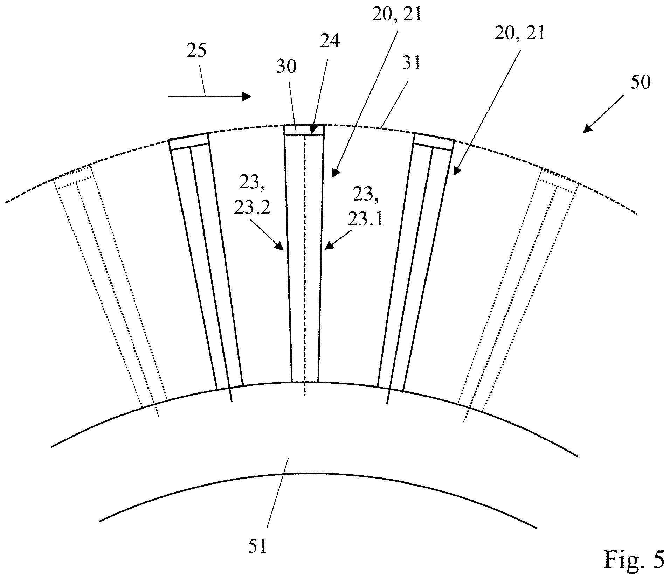

**Fig. 5** zeigt eine zu Figur 2 alternative Ausgestaltung der Laufschaufel 20, nämlich als Teil einer sogenannten Blisk 50 (*blade-integrated disk,* Blisk). Dabei sind die Schaufelblätter 21 der Laufschaufeln 20 integral an der Scheibe 51 vorgesehen, handelt es sich dabei also um ein integrales Teil (von dem in Figur 5 nur ein Ausschnitt gezeigt ist). Die Schaufelspitzenflächen 24 der Schaufelblätter 21 sind dabei jeweils mit einer Beschichtung 30 versehen, vergleiche die vorstehende Beschreibung im Detail.

### BEZUGSZEICHENLISTE

| | |
|---|---|
| Strömungsmaschine | 1 |
| Verdichter | 1a |
| Brennkammer | 1b |
| Turbine | 1c |
| Bauteil | 10 |
| Laufschaufel | 20 |
| Laufschaufelblatt | 21 |
| Schaufelfuß | 22 |
| Zwei Seitenflächen | 23 |
| Saugseitenfläche | 23.1 |
| Druckseitenfläche | 23.2 |
| Schaufelspitzenfläche | 24 |
| Umlaufrichtung | 25 |
| Beschichtung | 30 |
| Einlaufbelag | 31 |
| Kante | 35 |
| Verrundung | 36 |
| Erste Oberfläche | 41 |
| Zweite Oberfläche | 42 |
| Blisk | 50 |
| Scheibe | 51 |

## Patentansprüche

1. Verfahren zum Beschichten eines Bauteils (10),
wobei das Bauteil (10) eine erste und eine zweite Oberfläche (41, 42) aufweist, und wobei die erste und die zweite Oberfläche (41, 42) in einer Kante (35) aneinandergrenzen,
bei welchem Verfahren
i) zunächst die Kante (35) zwischen der ersten und zweiten Oberfläche (41, 42) verrundet wird, und
ii) anschließend eine Beschichtung (30) auf die erste Oberfläche (41) aufgebracht wird.

2. Verfahren nach Anspruch 1, bei welchem eine in Schritt i) zwischen der ersten und zweiten Oberfläche (41, 42) eingebrachte Verrundung (35) in einem Schnitt betrachtet einen Krümmungsradius R hat, der mindestens einem 0,5-fachen einer Dicke d der Beschichtung (30) entspricht, R ≥ 0,5·d.

3. Verfahren nach Anspruch 1 oder 2, bei welchem eine in Schritt i) zwischen der ersten und zweiten Oberfläche (41, 42) eingebrachte Verrundung in einem Schnitt betrachtet einen Krümmungsradius R hat, der höchstens einem 5-fachen einer Dicke d der Beschichtung entspricht, R ≤ 5·d.

4. Verfahren nach einem der vorstehenden Ansprüche, bei welchem die erste Oberfläche (41) vor Schritt i) materialabtragend bearbeitet und dabei die Kante (35) erzeugt wird.

5. Verfahren nach einem der vorstehenden Ansprüche, bei welchem das Verrunden der Kante (35) in Schritt i) eine Bearbeitung mit einer Bürste umfasst.

6. Verfahren nach Anspruch 5, bei welchem in Schritt i) nach der Bearbeitung mit der Bürste eine schleifende Bearbeitung erfolgt.

7. Verfahren nach einem der vorstehenden Ansprüche, bei welchem die Beschichtung (30) in Schritt ii) galvanisch aufgebracht wird.

8. Verfahren nach einem der vorstehenden Ansprüche, bei welchem die Beschichtung (30) Bornitrid aufweist.

9. Verfahren nach einem der vorstehenden Ansprüche, bei welchem das Bauteil (10) ein Schaufelblatt (21) für eine Strömungsmaschine ist.

10. Verfahren nach Anspruch 9, bei welchem die erste Oberfläche (41) eine Schaufelspitzenfläche (24) und die zweite Oberfläche (42) eine Seitenfläche (23) des Schaufelblatts (21) ist.

11. Verfahren zum Herstellen eines Bauteils (10) für eine Strömungsmaschine (1), wobei das Bauteil (10) in einem Verfahren nach einem der vorstehenden Ansprüche beschichtet wird.

12. Bauteil (10) für eine Strömungsmaschine, hergestellt in einem Verfahren nach Anspruch 11, bei welchem die auf die erste Oberfläche (41) aufgebrachte Beschichtung (30) in einem Schnitt betrachtet allenfalls bündig mit der zweiten Oberfläche (42) liegt, also nicht seitlich übersteht.
